# EUROPÄISCHE PATENTSCHRIFT

(11) **EP 0 718 123 B1**
(45) Veröffentlichungstag und Bekanntmachung des Hinweises auf die Patenterteilung: **09.09.1998**
(21) Anmeldenummer: 95890199.3
(22) Anmeldetag: 09.11.1995
(51) Int. Cl.: B60C 11/03, B60C 11/04

(54) **Fahrzeugreifen**
Vehicle tyre
Bandage pneumatique pour véhicule

(30) Priorität: 21.12.1994 AT 2372/94
(43) Veröffentlichungstag der Anmeldung: 26.06.1996
(73) Patentinhaber: Semperit Reifen Aktiengesellschaft, A-2514 Traiskirchen (AT)
(72) Erfinder: Zeiner, Paul, Dipl.-Ing., A-3001 Mauerbach (DE); Arendt, Gernot, Dipl.-Ing., A-2512 Tribuswinkel (DE)
(74) Vertreter: Vinazzer, Edith, Dipl.-Ing.

(56) Entgegenhaltungen:
- EP-A- 0 325 905
- EP-A- 0 573 890
- US-A- 4 641 695
- PATENT ABSTRACTS OF JAPAN vol. 018 no. 424 (M-1652) ,9.August 1994 & JP-A-06 127218 (BRIDGESTONE CORP) 10.Mai 1994,
- PATENT ABSTRACTS OF JAPAN vol. 018 no. 292 (M-1615) ,3.Juni 1994 & JP-A-06 055909 (SUMITOMO RUBBER IND LTD) 1.März 1994,

## Beschreibung

Die vorliegende Erfindung betrifft einen Fahrzeugreifen mit einem drehrichtungsgebunden gestalteten Laufstreifenprofil, in dessen beiden Laufstreifenhälften insgesamt pfeilartig zum Mittelbereich des Laufstreifens verlaufende Querrillen angeordnet sind, zwischen welchen Querrippen gebildet sind, die durch Quernuten in Blöcke geteilt sind, wobei die Quernuten bezüglich der Reifenumfangsrichtung eine Neigung aufweisen, die gegensinnig ist zu der Neigung der Querrillen, und mit der Umfangsmittellinie des Laufstreifenprofiles einen Winkel einschließen, der größer als 90° und höchstens 135° ist.

Ein Fahrzeugreifen mit einem derartigen Laufstreifenprofil ist beispielsweise aus der JP-A-6 127 218 bekannt. Die Anordnung der pfeilartig bzw. V-förmig verlaufenden Rillen zu den Quernuten ist so getroffen, daß durch die Quernuten eine Vielzahl von zwischen in Umfangsrichtung benachbarten Rillen angeordneten Blöcken gebildet wird. Das dadurch entstehende Laufstreifenprofil ist, insbesondere im Laufstreifenmittelbereich, vergleichsweise wenig stabil.

In der EP-A 0 296 605 sind Ausführungsvarianten von Laufstreifenprofilen dargestellt und beschrieben, die bezüglich der Mittelumfangslinie des Reifens sowohl symmetrisch als auch asymmetrisch gestaltet sein können. In jedem Fall setzt sich das Laufstreifenprofil aus Profilelementen zusammen, die durch in Umfangsrichtung geradlinig verlaufende Umfangsnuten und durch schräg orientierte Querrillen gebildet werden. Die schräg orientierten Querrillen sind dabei so angeordnet, daß eine gepfeilte Profilstruktur entsteht. Wie in dieser Druckschrift erwähnt, sind diese bekannten Laufstreifenprofile hinsichtlich hoher Wasseraufnahmefähigkeit, Wasserverdrängung und Wasserableitung optimiert.

Die Erfindung hat sich nun die Aufgabe gestellt, einen Reifen mit einem Laufstreifenprofil der eingangs genannten Art bezüglich einiger Eigenschaften ausgewogener zu gestalten, insbesondere was das Handlingsverhalten und das beim Abrollen entstehende Reifen/Fahrbahngeräusch betrifft. Diese Ausgewogenheit soll jedoch keineswegs zu Lasten des Aquaplaningverhaltens gehen.

Gelöst wird die gestellte Aufgabe erfindungsgemäß dadurch, daß jede Querrippe durch eine einzige Quernut geteilt ist, wobei im Laufstreifenmittelbereich, insbesondere entlang der Umfangsmittellinie eine gerade umlaufende Umfangsrille vorgesehen ist, die beidseitig durch ein Laufstreifenband begrenzt ist

In den Querrippen ist daher nach der Erfindung anstelle der ansonsten üblichen, in Umfangsrichtung oder im wesentlichen in Umfangsrichtung verlaufenden Nuten jeweils eine gegenüber der Umfangsmittellinie relativ stark geneigt verlaufende Nut vorgesehen. Dabei hat sich herausgestellt, daß ein Reifen mit einem derartigen Profil auch ein sehr gutes Wasserableitvermögen besitzt, wobei gleichzeitig gute Handlingseigenschaften, was beispielsweise die Geradeauslaufstabilität und das Ansprechen auf Lenkkräfte betrifft, gewährleistet sind. Darüber hinaus hat diese Nutausbildung einen günstigen Einfluß auf das Abrollgeräusch im Sinne eines Beitrages zur gleichmäßigen Verteilung der beim Abrollen emittierten Frequenzen auf ein breites Frequenzband. Die Laufstreifenbänder im Mittelbereich unterstützen eine gute Geradeauslaufstabilität.

Dabei ist der Winkel, den die Quernuten mit der Mittelumfangslinie des Laufstreifenprofiles einschließen insbesondere mindestens 92° und höchstens 120°. Bei einer Anordnung der Quernuten in diesem Winkelbereich macht sich der Einfluß auf das Abrollgeräusch besonders bemerkbar.

Es ist weiters von Vorteil, wenn eine Abstimmung der Neigung der Quernuten auf die Neigung der Querrillen erfolgt, insbesondere derart, daß der Winkel, den jede Quernut mit der Querrille im laufstreifeninnenseitigen Schnittpunkt miteinander einschließt, zwischen 30 und 75° beträgt.

Dabei ist es günstig, wenn jedes Laufstreifenband von den benachbarten Blöcken der Querrippen durch eine schmale, ca. 1,1 bis 1,5 mm breite Umfangsnut getrennt ist, welche zumindest stellenweise eine geringere Tiefe besitzt, als die sonstige Dessintiefe.

Zur Unterstützung des guten Wasserablaufvermögens ist es ferner von Vorteil, wenn die Querrillen in den beiden Laufstreifenbändern als Sackrillen enden.

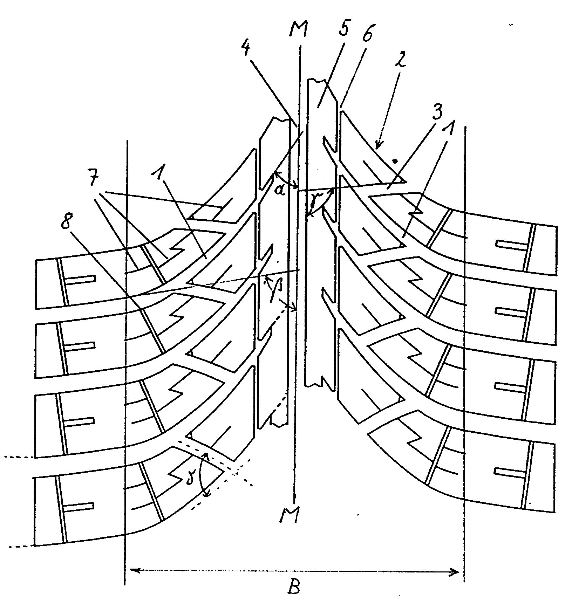

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines gemäß der Erfindung gestalteten Laufstreifenprofiles dargestellt.

Das in der Zeichnungsfigur dargestellte Laufstreifenprofil ist insbesondere für einen PKW-Sommerreifen in S- oder T-Ausführung vorgesehen. In der nun nachfolgenden Beschreibung wird dabei das Profil insbesondere über die Breite B, die der Breite in der Bodenaufstandsfläche (gemäß E.T.R.T.O.-Standards Manual) entspricht, betrachtet.

Das in der Zeichnungsfigur gezeigte Laufstreifenprofil besitzt eine Vielzahl von Querrillen 1, die sich jeweils vom Mittelbereich des Laufstreifens bis über die Bodenaufstandsfläche (Breite B) erstrecken. Die Querrillen 1 besitzen einen leicht gekrümmten Verlauf, derart, daß sie im Laufstreifenmittelbereich mit der Mittelumfangslinie M-M einen kleineren Winkel einschließen, als an den Laufstreifenrändern. Der zugehörige Winkel α im Laufstreifenmittelbereich beträgt zwischen 25 und 45°, der zugehörige Winkel β an den Laufstreifenrändern zwischen 70 und 85°. Der Querrillenverlaufin den beiden Laufstreifenhälften ist dabei so gewählt, daß dem Laufstreifenprofil eine gepfeilte Grundstruktur verliehen wird, die eine Drehrichtungsabhängigkeit bewirkt. Ein mit einem derartigen Profil versehener Reifen soll dabei am Untergrund so abrollen, daß die im Mittelbereich des Laufstreifens verlaufenden Querrillenabschnitte zuerst mit dem Untergrund in Berührung kommen. Die Breite der Querrillen 1 wird im Zuge ihres Verlaufes vom Mittelbereich des Laufstreifens zu den Laufstreifenrändem zu insbesondere kontinuierlich größer.

Im dargestellten Ausführungsbeispiel sind die beiden Laufstreifenhälften gleich gestaltet, jedoch nicht exakt symmetrisch zur Umfangsmittellinie M-M, da die beiden Hälften in Umfangsrichtung gegeneinander versetzt bzw. verdreht sind. Diese Maßnahme wirkt sich günstig auf eine Vergleichmäßigung des Abrollgeräusches aus.

Wie bekannt, wird das Laufstreifenprofil, um die Geräuschentwicklung während des Abrollens des Reifens gering zu halten, mit einer sogenannten Pitchfolge versehen. Als Pitches werden dabei die über den Reifenumfang aufeinanderfolgenden gleichartig gestalteten Profilabschnitte bezeichnet, die jedoch mit verschiedenen Umfangslängen versehen werden. Die Gesamtpitchanzahl über den Reifenumfang wird bei einem Laufstreifenprofil, wie dargestellt, üblicherweise zwischen 65 und 75 gewählt, die Anzahl der unterschiedlichen Pitchlängen beträgt beim dargestellten Laufstreifenprofil 4. Die für die Geräuschentwicklung günstigste Aufeinanderfolge (Pitchfolge) der Pitches mit unterschiedlichen Längen wird bekannterweise rechnerisch ermittelt. In der Zeichnungsfigur sind in der linken Laufstreifenhälfte die Pitchgrenzen des längsten Pitches markiert.

Durch die Querrillen 1 werden jeweils zwischen zwei in Umfangsrichtung benachbarten Querrillen 1, Querrippen 2 gebildet. Jede Querrippe 2 ist etwa halbmittig durch eine Quernut 3 geteilt. Die Quernuten 3 besitzen dabei eine Breite, die in etwa der Breite der Querrillen 1 entspricht bzw. nur geringfügig von der Breite der Querrillen 1 abweicht. Die Quernuten 3 bewirken eine Teilung der Querrippen 2, so daß jede Querrippe 2 beidseitig ihrer Quernut 3 eine Art Blockstruktur besitzt. Die Quernuten 3 verlaufen derart, daß sie mit der Umfangsmittellinie M-M einen Winkel γ von mehr als 90° und höchstens 135° einschließen. Bevorzugt beträgt dieser Winkel γ zwischen 92 und 120°. Der Winkel γ variiert über den Reifenumfang derart, daß er umso größer ist, je größer die Länge des Pitches ist, in welchem die Quernut 3 verläuft. Der Winkel δ, den jede Quernut 3 mit der Querrille 1 im laufstreifeninnenseitig liegenden Schnittpunkt einschließt, beträgt zwischen 30 und 75°. Die Anordnung ist ferner so getroffen, daß die einander zuordenbaren Schnittpunkte zwischen den Quernuten 3 und den Querrillen 1, die gleichzeitig Eckpunkte bzw. Eckbereich von Querrippenteilen sind, sämtlich auf Geraden liegen, die parallel zur Umfangsmittellinie M-M verlaufen. Gemeinsam mit der schon beschriebenen Variation des Winkels γ in Abhängigkeit von der jeweiligen Pitchlänge und durch eine entsprechende Abstimmung der Breiten der Querrillen 1 und der Quernuten 3 wird sichergestellt, daß die Positivanteile in den einzelnen Pitches (Anteil an der Gesamtfläche, welche mit dem Boden in Berührung kommt) in jedem Pitch gleich groß ist.

Beim dargestellten Ausführungsbeispiel ist ferner entlang der Umfangsmittellinie M-M eine relativ breite Umfangsrille 4 vorgesehen, die beidseitig durch je ein relativ schmales Laufstreifenband 5 begrenzt ist, wobei in den Laufstreifenbändern 5 die Querrillen 1 als Sacknuten bzw. Einschnitte enden. Die beiden Laufstreifenbänder 5 sind durch schmale Umfangsnuten 6 von den Querrippen 2 getrennt. Die Umfangsnuten 6 besitzen dabei eine Breite, die etwa zwischen 1,1 bis 1,5 mm gewählt wird, und eine Tiefe, die der allgemeinen Dessintiefe, die zwischen 7 und 9 mm gewählt wird und üblicherweise 8 mm beträgt, entsprechen kann. Die Umfangsnuten 6 können jedoch auch, vor allem in jenen Bereichen, wo sie eine Trennung von den Querrippen 2 bewirken, zumindest stellenweise ein geringere Tiefe als die sonstige Dessintiefe aufweisen. Diese Maßnahme wirkt sich günstig auf die Stabilität des Laufstreifenprofiles im Mittelbereich und damit auch auf das Fahrverhalten aus.

Wie dargestellt, können ferner Profilteile mit Lamellenfeineinschnitten 7 versehen werden. Dabei handelt es sich, wie bekannt, um 0,3 bis 0,8 mm breite Einschnitte, deren Tiefe ebenfalls der sonstigen Dessintiefe entsprechen kann, die jedoch auch zumindest über einen Teil ihrer Länge eine geringere Tiefe aufweisen können. So sind beispielsweise in den schulterseitig angeordneten Querrippenteilen Lamellenfeineinschnitte 7 angeordnet, die in Entlüftungsnuten 8 einmünden. Entlüftungsnuten besitzen eine Breite von 1 bis 1,5 mm und eine relativ geringe Tiefe von 1 bis 2 mm, und dienen, wie schon ihr Name sagt, zur Luftableitung und helfen somit, die Geräuschentwicklung zu minimieren.

## Patentansprüche

1. Fahrzeugreifen mit einem drehrichtungsgebunden gestalteten Laufstreifenprofil, in dessen beiden Laufstreifenhälften insgesamt pfeilartig zum Mittelbereich des Laufstreifens verlaufende Querrillen (1) angeordnet sind, zwischen welchen Querrippen (2) gebildet sind, die durch Quernuten (3) in Blöcke geteilt sind, wobei die Quernuten bezüglich der Reifenumfangsrichtung eine Neigung aufweisen, die gegensinnig ist zu der Neigung der Querrillen (1), und mit der Umfangsmittellinie des Laufstreifenprofiles einen Winkel einschließen, der größer als 90° und höchstens 135° ist, dadurch gekennzeichnet, daß jede Querrippe (2) durch eine einzige Quernut (3) geteilt ist, wobei im Laufstreifenmittelbereich, insbesondere entlang der Umfangsmittellinie (M-M), eine gerade umlaufende Umfangsrille (4) vorgesehen ist, die beidseitig durch ein Laufstreifenband (5) begrenzt ist

2. Fahrzeugreifen nach Anspruch 1, dadurch gekennzeichnet, daß der Winkel (γ), den die Quernut (3) mit der Umfangsmittellinie (M-M) einschließt, mindestens 92° und höchstens 120° ist.

3. Fahrzeugreifen nach Anspruch 1 oder Anspruch 2, dadurch gekennzeichnet, daß der Winkel (δ), den jede Quernut (3) mit der Querrille (1) im laufstreifeninnenseitigen Schnittpunkt einschließt, zwischen 30 und 75° beträgt.

4. Fahrzeugreifen nach einem der Ansprüche 1 bis 3, dadurch gekennzeichnet, daß jedes Laufstreifenband (5) von den benachbarten Blöcken der Querrippen (2) durch eine schmale, ca. 1,1 bis 1,5 mm breite Umfangsnut (6) getrennt ist, welche zumindest stellenweise eine geringere Tiefe besitzt, als die sonstige Dessintiefe.

5. Fahrzeugreifen nach einem der Ansprüche 1 bis 4, dadurch gekennzeichnet, daß die Querrillen (1) in den beiden Laufstreifenbändern (5) als Sackrillen enden.

## Claims

1. Vehicle tyre, having a tread strip profile which is adapted to the direction of rotation, and in the two tread strip halves of which profile there are disposed transverse grooves (1), which extend generally in the form of an arrow to the central region of the, tread strip, transverse ribs (2) being formed between said grooves and being divided into blocks by means of transverse notches (3), the transverse notches having an inclination, relative to the circumferential direction of the tyre, which is in the opposite direction to the inclination of the transverse grooves (1), and said notches forming with the circumferential centre line of the tread strip profile an angle which is greater than 90° and is 135° at the most, characterised in that each transverse rib (2) is divided by a single transverse notch (3), a rectilinearly circulatory circumferential groove (4) being provided in the central region of the tread strip, more especially along the circumferential centre line (M-M), and being defined on each side by a tread strip band (5).

2. Vehicle tyre according to claim 1, characterised in that the angle (γ), which is formed between the transverse notch (3) and the circumferential centre line (M-M), is at least 92° and is 120° at the most.

3. Vehicle tyre according to claim 1 or claim 2, characterised in that the angle (δ), which is formed between each transverse notch (3) and the transverse groove (1) at the intersection on the inside of tree tread strip, is between 30° and 75°.

4. Vehicle tyre according to one of claims 1 to 3, characterised in that each tread strip band (5) is separated from the adjacent blocks of the transverse ribs (2) by a narrow circumferential notch (6), which has a width of between approx. 1.1 and 1.5 mm and has a smaller depth than the other pattern depth, at least at various locations.

5. Vehicle tyre according to one of claims 1 to 4, characterised in that the transverse grooves (1) terminate in the two tread strip bands (5) as blind grooves.

## Revendications

1. Pneumatique pour véhicule comportant une bande de roulement, dont la sculpture est conformée d'une manière liée au sens de rotation et dans les moitiés de laquelle sont disposées des rainures transversales (1) qui s'étendent globalement sous la forme d'une flèche en direction de la partie médiane de la bande de roulement et entre lesquelles sont formées des nervures transversales (2), qui sont subdivisées en blocs par des rainures transversales (3), et dans lequel les rainures transversales présentent, par rapport à a direction circonférentielle du pneumatique, une inclinaison qui est opposée à l'inclinaison des rainures transversales (1) et fait avec la ligne médiane circonférentielle de la sculpture de la bande de roulement un angle qui est supérieur à 90° et est égal au maximum à 135°, caractérisé en ce que chaque nervure transversale (2) est subdivisée par une seule rainure transversale (3), auquel cas dans la partie médiane de la bande de roulement et notamment le long de la ligne médiane circonférentielle (M-M) est prévue une rainure circonférentielle rectiligne (4), qui est limitée, des deux côtés, par un ruban (5) de la bande de roulement.

2. Pneumatique pour véhicule selon la revendication 1, caractérisé en ce que l'angle (γ), que la rainure transversale (3) fait avec la ligne médiane circonférentielle (M-M), est égal au minimum à 92° et au maximum à 120°.

3. Pneumatique pour véhicule selon la revendication 1 ou la revendication 2, caractérisé en ce que l'angle (δ), que chaque rainure transversale (3) fait avec la rainure transversale (1) au point d'intersection situé sur le côté intérieur de la bande de roulement, est compris entre 30 et 75°.

4. Pneumatique pour véhicule selon l'une des revendications 1 à 3, caractérisé en ce que chaque ruban (5) de la bande de roulement est séparé des blocs voisins des nervures transversales (2) par une rainure circonférentielle étroite (6) d'une largeur comprise entre environ 1,1 et 1,5 mm et qui possède au moins par endroits une profondeur inférieur à la profondeur de dessin présente par ailleurs.

5. Pneumatique pour véhicule selon l'une des revendications 1 à 4, caractérisé en ce que les rainures transversales (1) se terminent par des rainures en cul-de-sac dans les deux rubans (5) de la bande de roulement.
